# FASCICULE DE BREVET EUROPEEN

(11) **EP 1 375 298 B1**
(45) Date de publication et mention de la délivrance du brevet: **26.11.2008**
(21) Numéro de dépôt: 03291537.3
(22) Date de dépôt: 23.06.2003
(51) Int. Cl.: B62D 1/19

(54) **Dispositif d'absorption d'énergie d'une colonne de direction de véhicule automobile**
Kraftfahrzeug- Lenksäulen- Energieaufnahmeeinrichtung
Motor vehicle steering column energy absorption device

(30) Priorité: 27.06.2002 FR 0208046
(43) Date de publication de la demande: 02.01.2004
(73) Titulaire: NACAM France S.A., 41100 Vendôme (FR)
(72) Inventeur: Lange, Patrick, 44500 La Baule (FR); Laporte, Christophe, 41100 Villerable (FR); Briere, Guillaume, 41100 Vendome (FR)
(74) Mandataire: Cabinet Bloch & Gevers

(56) Documents cités:
- EP-A- 0 849 141
- EP-A- 1 127 772
- WO-A-02/34607
- DE-A- 4 017 995

## Description

La présente invention se rapporte à un dispositif d'absorption d'énergie d'une colonne de direction d'un véhicule automobile. Le dispositif selon l'invention s'applique à une colonne de direction réglable en profondeur ou en inclinaison ou bien à une colonne de direction réglable en profondeur et en inclinaison. Ledit dispositif peut s'appliquer également à une colonne de direction non réglable. La colonne de direction comporte un arbre de direction, qui est monté dans un tube-corps et qui porte le volant de direction ; ledit tube-corps étant supporté et bloqué sur la structure du véhicule à la position voulue soit au montage en usine dans le cas d'une colonne de direction fixe, soit par le conducteur pour une colonne de direction réglable.

Les différents dispositifs connus d'absorption d'énergie de colonnes de direction comportent généralement un ensemble support, qui est constitué d'un élément support fixe et d'un élément support mobile. En fonctionnement normal, l'élément support mobile est fixe par rapport à l'élément support fixe, qui est solidaire de la structure du véhicule. En cas de choc, le dispositif d'absorption d'énergie est agencé de manière, que l'élément support mobile se déplace en glissant par rapport à l'élément support fixe. L'absorption d'énergie dépend des éléments prévus à cet effet, et sa valeur peut être prévue et connue de façon relativement précise. L'absorption d'énergie présente cependant l'inconvénient de dépendre de la position de réglage de la colonne.

Il faut ajouter à cela une absorption d'énergie due aux différentes forces de frottement, qui se manifestent lors du glissement de l'élément support mobile par rapport à l'élément support fixe. Cette dernière absorption d'énergie est mal connue et difficilement prévisible, ce qui entraîne un dispositif d'absorption d'énergie relativement imprécis.

Ainsi dans la demande de brevet européen EP 0849141, afin de permettre le déplacement axial en cas de choc, il y a des moyens de friction consistant en des bossages agencés sur une pièce de montage du tube-corps mobile en cas de choc, qui coopèrent avec des surfaces de freinage d'un patin relié au support et fixe lors du choc. La demande de brevet européen EP 1127772 se rapporte également à un dispositif de guidage en cas de choc. Mais ce dispositif est agencé entre deux éléments support d'un élément support, avec des éléments disposés symétriquement par raport au plan vertical de l'axe de direction.

Le but de la présente invention est de proposer un dispositif d'absorption d'énergie d'une colonne de direction de véhicule automobile qui évite les inconvénients décrits ci-dessus. Le dispositif d'absorption d'énergie selon l'invention devra permettre d'avoir un agencement du guidage de la colonne de direction qui entraîne une absorption d'énergie supplémentaire, qui soit négligeable par rapport à l'absorption d'énergie demandée et/ou ajustable avec précision.
De plus, le dispositif d'absorption d'énergie selon l'invention devra s'intégrer facilement dans l'encombrement des colonnes de direction existantes.

Selon un mode de réalisation, l'invention se rapporte à un dispositif d'absorption d'énergie d'une colonne de direction de véhicule automobile, qui est constituée par un arbre de direction monté tournant autour d'un axe de direction dans un tube-corps. Ledit tube-corps est relié à un ensemble support fixé à la structure du véhicule. Le dispositif selon l'invention comporte essentiellement un élément d'appui qui est relié à l'ensemble support par un système de raccordement latéral par rapport au plan vertical de l'axe de direction.

L'élément d'appui est disposé latéralement par rapport au plan vertical de l'axe de direction, et est disposé entre ledit tube-corps et un montant latéral de l'ensemble support, qui est sensiblement parallèle au plan vertical de l'axe de direction.
Un système de guidage axial suivant l'axe de direction est aménagé entre ledit tube-corps et l'élément d'appui, et un élément de coulissement latéral par rapport au plan vertical de l'axe de direction qui est rapporté et agencé sur le tube-corps.
L'élément de coulissement latéral est sensiblement parallèle au plan vertical de l'axe de direction et comprend une portion centrale qui se prolonge verticalement à chacune de ses deux extrémités par un chemin de roulement interne, chacun des deux chemins de roulement internes ayant une direction sensiblement parallèle à l'axe de direction, les deux chemins de roulement internes étant situés de part et d'autre d'un plan de serrage passant par l'axe de direction et perpendiculaire au plan vertical de l'axe de direction.

L'élément d'appui comprend une portion centrale sensiblement verticale qui vient s'appliquer contre le montant latéral de l'ensemble support, et qui se prolonge verticalement à chacune de ses deux extrémités par un chemin de roulement externe, chacun des deux chemins de roulement externes ayant une direction sensiblement parallèle à l'axe de direction, les deux chemins de roulement externes étant situés de part et d'autre du plan de serrage de l'axe de direction.
Des billes sont disposées axialement entre l'élément de coulissement latéral du tube-corps et l'élément d'appui. Lesdites billes sont agencées en deux ensembles qui sont disposés respectivement entre le chemin de roulement interne et le chemin de roulement externe correspondant, chacun des deux ensembles ayant ses billes qui sont maintenues les unes par rapport aux autres par une cage.
Ledit dispositif est agencé de manière :
- qu'en fonctionnement normal, il n'y ait aucun mouvement de coulissement axial entre le tube-corps et l'élément d'appui ;
- et qu'en cas de choc, il y ait un coulissement axial entre l'élément de coulissement latéral du tube-corps portant le volant de direction et l'élément d'appui maintenu en position par rapport à l'ensemble support par le système de raccordement, avec une quantité d'énergie relativement négligeable par rapport à l'absorption d'énergie totale et/ou ajustable avec précision.

Plus précisément selon l'invention, chaque chemin de roulement interne et externe est constitué par deux plans inclinés l'un par rapport à l'autre et parallèle à l'axe de direction ; l'extrémité arrière du côté du volant de direction de chacun des deux chemins de roulement externes ayant une portion décrochée qui se rabat contre l'extrémité de la cage des billes correspondantes.
De plus selon l'invention, un élément d'absorption d'énergie peut être disposé entre l'élément d'appui et le tube-corps, qui coulisse, lors d'un choc, dans l'élément d'appui qui reste fixe ; en fonctionnement normal l'élément d'absorption d'énergie étant fixe par rapport à l'élément d'appui et par rapport au tube-corps, ladite absorption d'énergie est indépendante du réglage en position du tube-corps. L'élément d'absorption d'énergie est un bandeau métallique à section ajustée en fonction de l'énergie à absorber qui est monté parallèlement à la portion centrale de l'élément d'appui, dont l'extrémité avant est solidaire de ladite portion centrale, et dont l'extrémité arrière du côté du volant de direction s'engage et s'applique en se déformant lors d'un choc, dans l'extrémité avant du tube-corps.

Dans une variante de réalisation, l'extrémité arrière du bandeau métallique est liée au tube-corps et se déforme par rapport audit tube-corps.

Dans le cas d'une colonne de direction fixe :
- l'élément d'appui comporte deux portions inclinées l'une par rapport à l'autre et sensiblement parallèles à l'axe de direction, chaque portion inclinée étant disposée entre le chemin de roulement externe correspondant et la portion centrale ;
- ladite portion centrale est munie d'un trou de passage d'une tige de serrage appartenant au système de raccordement ;
- le montant latéral comporte deux portions de maintien, qui sont disposées de part et d'autre du plan de serrage, et qui sont agencées de manière à ce que la portion inclinée correspondante de l'élément d'appui vienne s'appliquer contre ladite portion de maintien lorsque le système de raccordement est bloqué ;
- le montant latéral comporte un trou de passage de la tige de serrage.

Dans le cas d'une colonne de direction réglable en hauteur et/ou en profondeur, le système de raccordement entre l'élément d'appui et l'ensemble support est un système de serrage suivant un axe de serrage, qui est sensiblement perpendiculaire au plan vertical de l'axe de direction. Ledit système de serrage comprend une tige de serrage dont l'axe est l'axe de serrage, tous les autres éléments du système de serrage sont montés sur ladite tige de serrage, qui traverse l'élément d'appui, le montant latéral ainsi que tous les autres éléments de serrage ; la tige de serrage ayant une tête qui s'applique contre la face interne de la portion centrale de l'élément d'appui et une extrémité filetée sur laquelle se monte un écrou de serrage.

Dans ce dernier cas d'une colonne de direction réglable :
- l'élément d'appui comporte deux portions inclinées l'une par rapport à l'autre et sensiblement parallèles à l'axe de direction, chaque portion inclinée étant disposée entre le chemin de roulement externe correspondant et la portion centrale ;
- ladite portion centrale est munie d'un trou oblong de passage de la tige de serrage, qui est parallèle à l'axe de direction ;
- un élément de maintien est disposé entre l'élément d'appui et la face interne du montant latéral, ledit élément de maintien comportant deux portions de maintien, qui sont disposées de part et d'autre du plan de serrage, et qui sont agencées de manière à ce que la portion inclinée correspondante de l'élément d'appui vienne s'appliquer contre ladite portion de maintien lorsque le système de serrage est en position verrouillée ;
- ledit élément de maintien comporte un trou de passage de la tige de serrage ;
- le montant latéral comporte un trou oblong de passage de la tige de serrage, qui est perpendiculaire au plan de serrage ;
- la tige de serrage porte un élément de coulissement dans le trou oblong de l'élément d'appui, ledit élément de coulissement étant revêtu d'un matériau plastique à faible coefficient de frottement.

Le dispositif d'absorption d'énergie d'une colonne de direction selon l'invention présente ainsi l'avantage d'offrir un agencement du guidage de ladite colonne, en cas de choc, qui demande une absorption d'énergie supplémentaire, qui est négligeable par rapport à l'absorption d'énergie exigée et/ou ajustable avec précision. Lors d'un choc sur le véhicule, l'effort est transmis par l'intermédiaire du volant de direction et de l'arbre de direction au tube-corps. Sous l'effet de cet effort, le tube-corps va coulisser en entraînant les billes en rotation. Le dispositif de l'invention permet ainsi une bonne maîtrise de l'effort dû au choc, tout en s'affranchissant des frottements. Il permet de séparer la fonction réglage en profondeur de la fonction absorption d'énergie de la colonne.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective du dispositif d'absorption d'énergie d'une colonne de direction selon l'invention ;
- la figure 2 est une vue suivant II de la figure 1 ;
- la figure 3 est une coupe suivant le plan III-III de la figure 2 ;

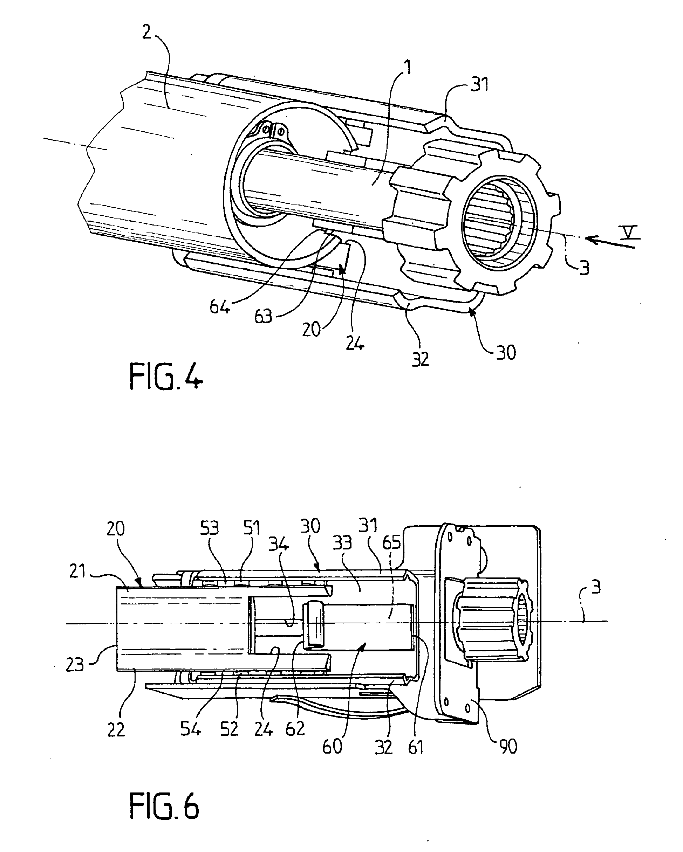

- la figure 4 est une vue partielle avant en perspective du tube-corps avec l'élément d'appui ;

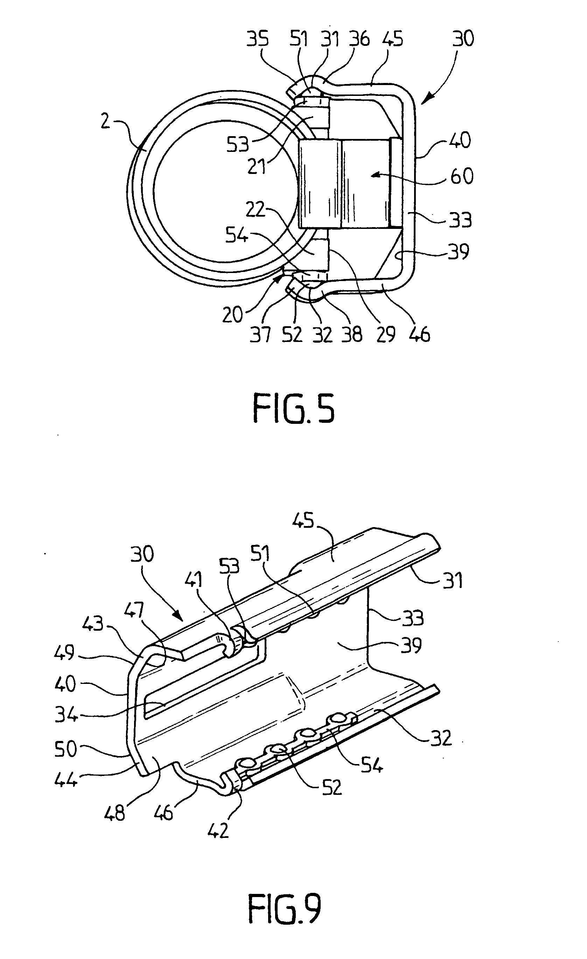

- la figure 5 est une vue transversale suivant V de la figure 4, à l'extrémité avant de l'élément d'appui ;
- la figure 6 est une vue en perspective de l'élément de coulissement latéral avec l'élément d'appui et le montant latéral de l'ensemble support ;

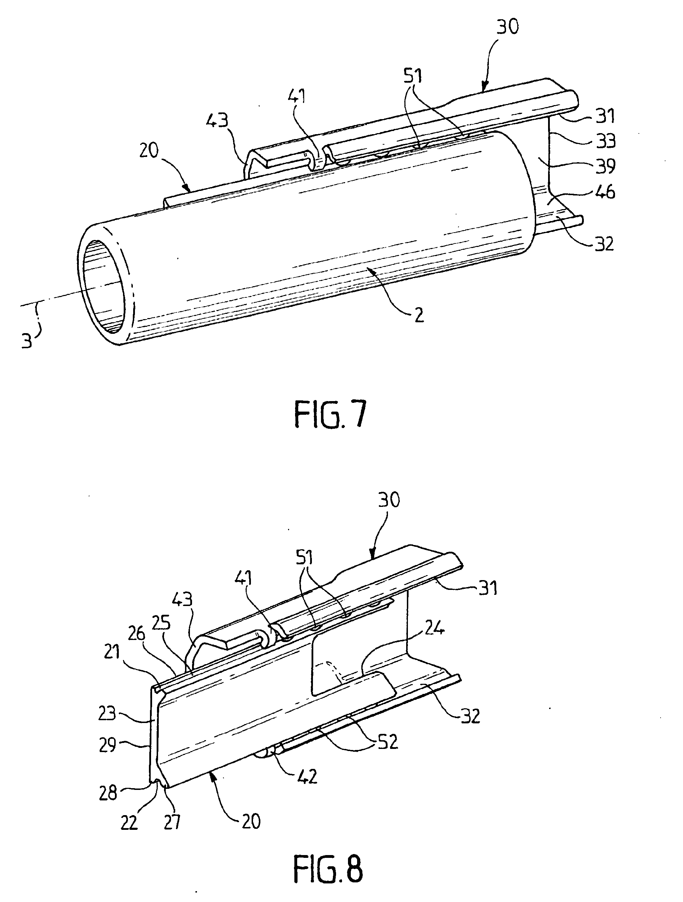

- la figure 7 est une vue arrière en perspective du tube-corps avec l'élément d'appui ;
- la figure 8 est une vue arrière en perspective de l'élément de coulissement latéral avec l'élément d'appui ;
- la figure 9 est une vue arrière en perspective de l'élément d'appui et des deux ensembles de billes ;
- la figure 10 est une vue en perspective correspondante à la figure 2 ; et
- la figure 11 est une coupe axiale suivant le plan de serrage d'une variante de réalisation.

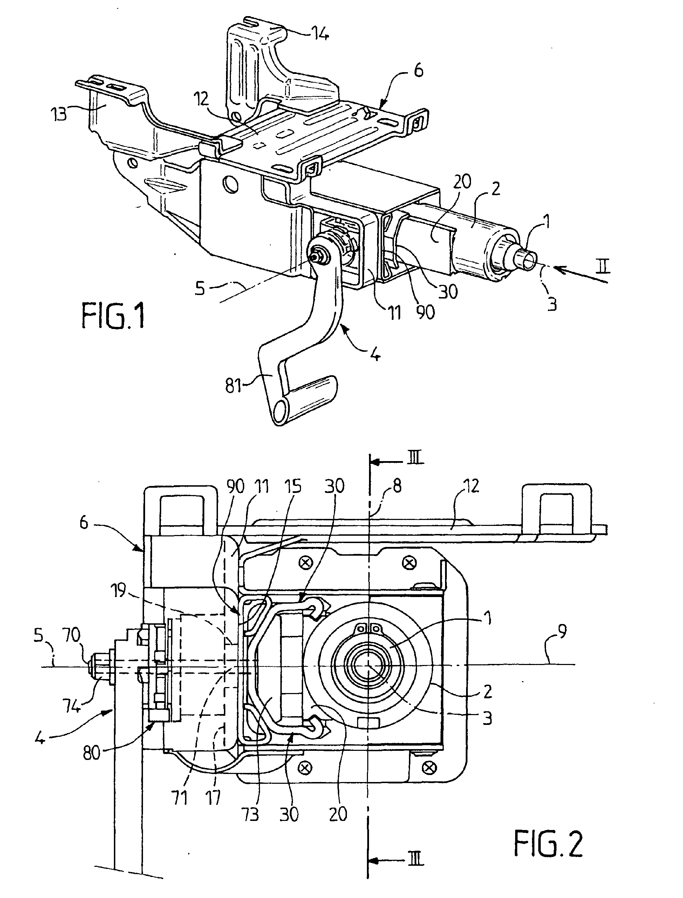

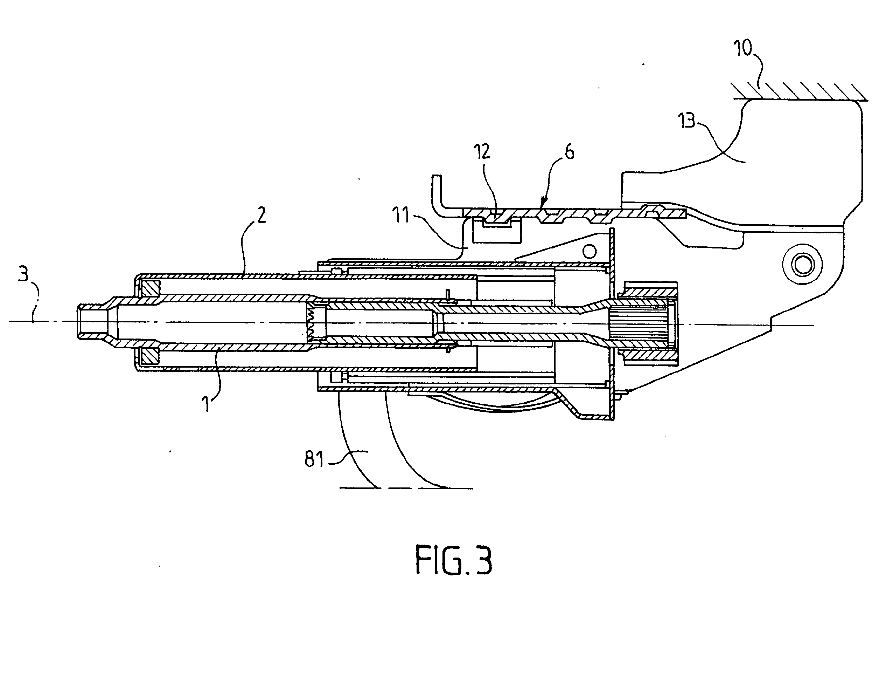

Comme on peut le voir sur les figures 1 à 3, l'invention se rapporte à un dispositif d'absorption d'énergie d'une colonne de direction de véhicule automobile. La colonne de direction comprend un arbre de direction 1, qui est monté tournant autour d'un axe de direction 3. L'arbre de direction 1 est monté tournant dans un tube-corps 2. Ledit tube-corps 2 est relié à un ensemble support 6, qui est fixé à la structure 10 du véhicule. L'ensemble support 6 comporte un élément latéral 13 et un élément latéral 14, qui sont disposés de part et d'autre d'un plan vertical 8 passant par l'axe de direction 3. L'élément latéral 13 et l'élément latéral 14 sont fixés à la structure 10 du véhicule, et ils sont solidaires d'un élément de raccordement 12 sensiblement perpendiculaires au plan vertical 8.

L'élément de raccordement 12 porte un montant latéral 11, qui est disposé d'un seul côté par rapport au plan vertical 8 et qui est sensiblement vertical, c'est-à-dire qu'il est sensiblement parallèle audit plan vertical 8 passant par l'axe de direction 3. La colonne de direction est réglable en inclinaison ou en profondeur, ou en inclinaison et en profondeur.

Le tube-corps 2 est relié à l'ensemble support 6 par un système de réglage en position en hauteur ou en profondeur ou en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage 5, qui est sensiblement perpendiculaire au plan vertical 8 passant par l'axe de direction 3.

Dans la suite de la description et pour un même élément, on appellera interne ou intérieur par rapport à l'axe de direction 3 ou par rapport au plan vertical 8, ce qui est le plus près de cet axe de direction 3 ou de ce plan vertical 8, et externe ou extérieur ce qui est le plus éloigné.

Ainsi, le montant latéral 11 a une face interne 15 et une face externe 17 par rapport à l'axe de direction 3, ou par rapport au plan vertical 8. La face interne 15 et la face externe 17 sont sensiblement parallèles au plan vertical 8.

De plus, le montant 11 possède un trou oblong 19 qui est orienté dans le sens du réglage en hauteur du système de réglage en position.

Le dispositif de réglage en position est bloqué à la position choisie par le système de serrage 4. L'axe de serrage 5 est également sensiblement perpendiculaire au montant latéral 11 de l'ensemble support 6. Le dispositif de serrage a deux positions : une position déverrouillée dans laquelle le dispositif de serrage est débloqué pour permettre le réglage demandé de la colonne de direction, et une position verrouillée dans laquelle le dispositif de serrage est bloqué pour garantir le maintien de la position choisie.

Dans le mode de réalisation de l'invention représenté sur les différentes figures, l'axe de serrage 5 traverse le tube-corps 2 au voisinage de l'axe de direction 3. Le plan, passant par l'axe de serrage 5 et l'axe de direction 3, est appelé plan de serrage 9 ; ce plan de serrage 9 est sensiblement perpendiculaire au plan vertical 8.

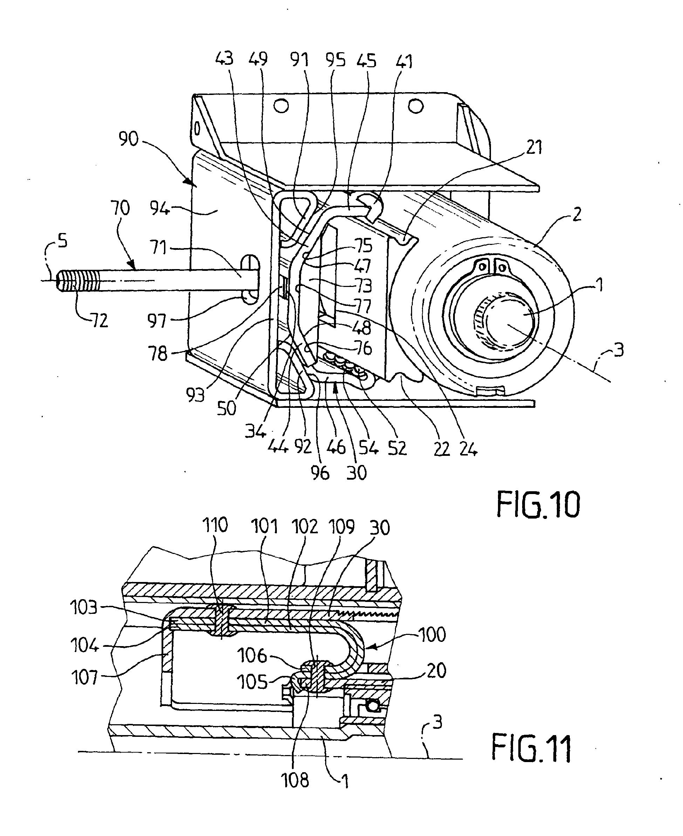

En se reportant plus précisément aux figures 2 et 10, le dispositif d'absorption d'énergie selon l'invention comporte un élément d'appui 30, et un système de guidage axial.

L'élément d'appui 30 est relié à l'ensemble support 6 par un système de raccordement, qui est un système de raccordement latéral par rapport au plan vertical 8 de l'axe de direction. C'est-à-dire que ledit système de raccordement se trouve d'un seul côté par rapport au plan vertical 8, et qu'il relie l'élément d'appui 30 au montant latéral 11 de l'ensemble support 6.

Le système de guidage axial agit suivant l'axe de direction 3, et il est aménagé entre le tube-corps 2 et l'élément d'appui 30.

Le système de guidage axial opère de manière :
. qu'en fonctionnement normal, le système de guidage axial est agencé de manière qu'il n'y ait aucun mouvement de coulissement axial entre le tube-corps 2 et l'élément d'appui 30 ;
. et qu'en cas de choc, il y ait un coulissement axial entre le tube-corps 2 portant le volant de direction et l'élément d'appui 30 maintenu en position par rapport à l'ensemble support 6 par le système de raccordement.

Le système de guidage axial comprend un élément de coulissement latéral 20 et l'élément d'appui 30 ; l'élément de coulissement latéral 20 se déplaçant, en cas de choc, dans l'élément d'appui 30 suivant l'axe de direction 3.

L'élément de coulissement latéral 20 est disposé d'un seul côté par rapport au plan vertical 8 de l'axe de direction 3. Ledit élément de coulissement latéral 20 est rapporté et agencé sur le tube-corps 2. L'élément d'appui 30 est disposé latéralement par rapport au plan vertical 8 de l'axe de direction 3. Ledit élément d'appui 30 est disposé entre ledit tube-corps 2 et le montant latéral 11 de l'ensemble support 6, qui est sensiblement parallèle au plan vertical 8 de l'axe de direction 3.

Le système de guidage axial comporte des billes 51, 52 qui sont disposées axialement entre le tube-corps 2 et l'élément d'appui 30, de manière, qu'en cas de choc, le coulissement axial demande une quantité d'énergie relativement négligeable par rapport à l'absorption d'énergie totale et/ou ajustable avec précision.

L'élément de coulissement latéral 20 est sensiblement parallèle au plan vertical 8 de l'axe de direction 3. Ledit élément de coulissement latéral 20 comprend une portion centrale 23, qui se prolonge verticalement à chacune de ses deux extrémités par un chemin de roulement interne 21 et 22. Chacun des deux chemins de roulement internes 21 et 22 a une direction sensiblement parallèle à l'axe de direction 3. Les deux chemins de roulement internes 21 et 22 sont situés de part et d'autre d'un plan de serrage 9 passant par l'axe de direction 3 et perpendiculaire au plan vertical 8 de l'axe de direction 3.

L'élément d'appui 30 comprend une portion centrale 33 sensiblement verticale qui vient s'appliquer contre le montant latéral 11 de l'ensemble support 6. Ledit élément d'appui 30 se prolonge verticalement à chacune de ses deux extrémités par un chemin de roulement externe 31 et 32. Chacun des deux chemins de roulement externes 31 et 32 ayant une direction sensiblement parallèle à l'axe de direction 3. Les deux chemins de roulement externes 31 et 32 sont situés de part et d'autre du plan de serrage 9 de l'axe de direction 3.

Les billes 51 et 52 sont agencées en deux ensembles qui sont disposés respectivement entre le chemin de roulement interne correspondant 21 et 22 et le chemin de roulement externe 31 et 32 correspondant. Chacun des deux ensembles a ses billes 51 et 52, qui sont maintenues les unes par rapport aux autres par une cage correspondante 53 et 54.

Chaque chemin de roulement est constitué par deux plans inclinés l'un par rapport à l'autre et parallèles à l'axe de direction 3. Le chemin de roulement interne 21 est constitué par deux plans inclinés 25 et 26, et le chemin de roulement externe 31 correspondant est constitué par deux plans inclinés 35 et 36. Le chemin de roulement interne 22 est constitué par deux plans inclinés 27 et 28, et le chemin de roulement externe 32 correspondant est constitué par deus plans inclinés 37 et 38.

L'extrémité arrière du côté du volant de direction de chacun des deux chemins de roulement externes 31 et 32 ayant une portion décrochée correspondante 41 et 42, qui se rabat contre l'extrémité de la cage correspondante 53 et 54 des billes 51 et 52 correspondantes.

Le dispositif d'absorption d'énergie selon l'invention comporte un élément d'absorption d'énergie 60, qui est disposé entre l'élément d'appui 30 et le tube-corps 2. Ledit tube-corps 2 coulisse lors d'un choc, dans l'élément d'appui 30 qui reste fixe. En fonctionnement normal, l'élément d'absorption d'énergie 60 est fixe par rapport à l'élément d'appui 30 et par rapport au tube-corps 2, ladite absorption d'énergie est indépendante du réglage en position du tube-corps 2.

L'élément d'absorption d'énergie 60 est un bandeau métallique à section ajustée en fonction de l'énergie à absorber qui est monté parallèlement à la portion centrale 33 de l'élément d'appui 30. Ledit élément d'absorption d'énergie 60 a une extrémité avant 61 et une extrémité arrière 62 du côté du volant de direction. L'extrémité avant 61 est engagée dans une lumière 65 aménagée dans ladite portion centrale 33. L'extrémité arrière 62 s'engage et s'applique en se déformant, lors d'un choc, dans le fond 64 d'une encoche 63 agencée à l'extrémité avant du tube-corps 2. La portion centrale 23 de l'élément de coulissement latéral 20 est munie, à son extrémité avant, d'une encoche 24 permettant l'engagement et le passage de l'élément d'absorption d'énergie 60 lors d'un choc.

Dans une variante de réalisation, l'extrémité arrière du bandeau métallique est liée au tube-corps 2 et se déforme par rapport audit tube-corps 2.

Le système de raccordement entre l'élément d'appui 30 et l'ensemble support 6 est le système de serrage 4 suivant un axe de serrage 5, qui est sensiblement perpendiculaire au plan vertical 8 de l'axe de direction 3.

Le système de serrage 4 comprend une tige de serrage 70 dont l'axe est l'axe de serrage 5. Tous les autres éléments du système de serrage 4 sont montés sur ladite tige de serrage 70. La tige de serrage 70 traverse l'élément d'appui 30, le montant latéral 11 ainsi que tous les autres éléments de serrage. La tige de serrage 70 a une tête 73, qui s'applique contre la face interne 39 de la portion centrale 33 de l'élément d'appui 30. La tige de serrage 70 a une extrémité externe filetée 72 sur laquelle se monte un écrou de serrage 74.

L'élément d'appui 30 comporte deux portions inclinées 43 et 44 l'une par rapport à l'autre, qui sont sensiblement parallèles à l'axe de direction 3. Chaque portion inclinée 43 et 44 est disposée entre le chemin de roulement externe 31 et 32 correspondant et la portion centrale 33. Ladite portion centrale 33 est munie d'un trou oblong de passage 34 de la tige de serrage 70, qui est parallèle à l'axe de direction 3.

Un élément de maintien 90 est disposé entre l'élément d'appui 30 et la face interne 15 du montant latéral 11. Ledit élément de maintien 90 comporte deux portions de maintien inclinées 91 et 92, qui sont disposées de part et d'autre du plan de serrage 9. Lesdites portions de maintien inclinées 91 et 92 sont agencées de manière à ce que la portion inclinée 43 et 44 correspondante de l'élément d'appui 30 vienne s'appliquer contre ladite portion de maintien inclinée 91 et 92, lorsque le système de serrage 4 est en position verrouillée.

Ledit élément de maintien 90 comporte un trou de passage 97 de la tige de serrage 70. Le montant latéral 11 comporte un trou oblong de passage 19 de la tige de serrage 70, qui est perpendiculaire au plan de serrage 9.

De plus, la tige de serrage 70 porte un élément de coulissement 78 dans le trou oblong 34 de l'élément d'appui 30. Ledit élément de coulissement 78 étant revêtu d'un matériau plastique à faible coefficient de frottement.

Le dispositif d'absorption d'énergie peut également s'appliquer à une colonne de direction non réglable en position. Dans ce cas, la fixation de l'élément d'appui 30 sur le montant latéral 11 comporte la tige de serrage 70.

L'élément d'appui 30 comporte deux portions inclinées 43 et 44 l'une par rapport à l'autre qui sont sensiblement parallèles à l'axe de direction 3. Chaque portion inclinée 43 et 44 est disposée entre le chemin de roulement externe 31 et 32 correspondant et la portion centrale 33. Ladite portion centrale 33 est munie d'un trou 34 de passage d'une tige de serrage 70 du système de raccordement.

Le montant latéral 11 comporte deux portions de maintien inclinées 91 et 92, qui sont disposées de part et d'autre du plan de serrage 9. Lesdites portions de maintien inclinées 91 et 92 sont agencées de manière à ce que la portion inclinée 43 et 44 correspondante de l'élément d'appui 30 vienne s'appliquer contre ladite portion de maintien inclinée 91 et 92 lorsque le système de raccordement est bloqué.

Le montant latéral 11 comporte un trou 19 de passage de la tige de serrage 70.

La variante de réalisation, dans laquelle l'extrémité arrière du bandeau métallique constitue l'élément d'absorption d'énergie, est lié au tube-corps 2 et se déforme par rapport audit tube-corps 2, elle est représentée sur la figure 11.

Un élément d'absorption d'énergie 100 est disposé entre l'élément d'appui 30 et l'élément de coulissement latéral 20 appartenant au tube-corps 2. L'élément d'absorption d'énergie comporte une portion interne 101 et une portion externe 102, qui ont la forme de bandeaux métalliques se recouvrant l'un l'autre. Les deux bandeaux métalliques ont une section ajustée en fonction de l'énergie à absorber, et sont montés parallèlement à la portion centrale 33 de l'élément d'appui;

L'élément d'appui 30 est muni à son extrémité avant d'un retour avant 107 faisant office d'élément de butée sensiblement perpendiculaire à l'axe de direction 3.

L'extrémité avant 103 de la portion interne 101 et l'extrémité avant 104 de la portion externe 102 viennent s'appliquer contre le retour avant 107. L'extrémité arrière 105 de la portion interne 101 vient se recourber contre l'extrémité avant 108 de l'élément de coulissement latéral 20. L'extrémité arrière 106 de la portion externe 102 vient recouvrir l'extrémité non recourbée de la portion interne 101. Un élément d'assemblage 109 du type rivet fixe la portion interne 101 et la portion externe 102 avec l'élément de coulissement latéral 20.

Un élément d'assemblage 110 du type rivet fixe la portion interne 101 et la portion externe 102 avec l'élément d'appui 30.

## Revendications

1. Dispositif d'absorption d'énergie d'une colonne de direction de véhicule automobile, ladite colonne étant constituée par un arbre de direction (1) monté tournant autour d'un axe de direction (3) dans un tube-corps (2), ledit tube-corps (2) étant relié à un ensemble support (6) fixé à la structure du véhicule, ledit dispositif comporte :
- un élément d'appui (30) qui est relié à l'ensemble support (6) par un système de raccordement latéral par rapport au plan vertical (8) de l'axe de direction ;
- l'élément d'appui (30) étant disposé latéralement par rapport au plan vertical (8) de l'axe de direction (3), et étant disposé entre ledit tube-corps (2) et un montant latéral (11) de l'ensemble support (6), qui est sensiblement parallèle au plan vertical (8) de l'axe de direction (3) ;
- un système de guidage axial suivant l'axe de direction (3), qui est aménagé entre ledit tube-corps (2) et l'élément d'appui (30) ;
**caractérisé en ce que** le système de guidage axial est constitué par :
- un élément de coulissement latéral (20) par rapport au plan vertical (8) de l'axe de direction (3) qui est rapporté et agencé sur le tube-corps (2) ;
- l'élément de coulissement latéral (20) est sensiblement parallèle au plan vertical (8) de l'axe de direction (3) et comprend une portion centrale (23) qui se prolonge verticalement à chacune de ses deux extrémités par un chemin de roulement interne (21, 22), chacun des deux chemins de roulement internes (21, 22) ayant une direction sensiblement parallèle à l'axe de direction (3), les deux chemins de roulement internes (21, 22) étant situés de part et d'autre d'un plan de serrage (9) passant par l'axe de direction (3) et perpendiculaire au plan vertical (8) de l'axe de direction (3) ;
- l'élément d'appui (30) comprend une portion centrale (33) sensiblement verticale qui vient s'appliquer contre le montant latéral (11) de l'ensemble support (6), et qui se prolonge verticalement à chacune de ses deux extrémités par un chemin de roulement externe (31, 32), chacun des deux chemins de roulement externes (31, 32) ayant une direction sensiblement parallèle à l'axe de direction (3), les deux chemins de roulement externes (31, 32) étant situés de part et d'autre du plan de serrage (9) de l'axe de direction (3) ;
- des billes (51, 52) qui sont disposées axialement entre l'élément de coulissement latéral (20) du tube-corps (2) et l'élément d'appui (30),
- les billes (51, 52) sont agencées en deux ensembles qui sont disposés respectivement entre le chemin de roulement interne (21, 22) et le chemin de roulement externe (31, 32) correspondant, chacun des deux ensembles ayant ses billes (51, 52) qui sont maintenues les unes par rapport aux autres par une cage (53, 54).
- ledit dispositif étant agencé de manière :
. qu'en fonctionnement normal, il n'y ait aucun mouvement de coulissement axial entre le tube-corps (2) et l'élément d'appui (30) ;
. et qu'en cas de choc, il y ait un coulissement axial entre l'élément de coulissement latéral (20) du tube-corps (2) portant le volant de direction et l'élément d'appui (30) maintenu en position par rapport à l'ensemble support (6) par le système de raccordement, avec une quantité d'énergie relativement négligeable par rapport à l'absorption d'énergie totale et/ou ajustable avec précision.

2. Dispositif d'absorption d'énergie selon la revendication 1, **caractérisé en ce que** chaque chemin de roulement interne (21, 22) et externe (31, 32) est constitué par deux plans inclinés (25, 26 - 27, 28) et (35, 36 - 37, 38) l'un par rapport à l'autre et parallèle à l'axe de direction (3) ; l'extrémité arrière du côté du volant de direction de chacun des deux chemins de roulement externes (31, 32) ayant une portion décrochée (41, 42) qui se rabat contre l'extrémité de la cage (53, 54) des billes (51, 52) correspondantes.

3. Dispositif d'absorption d'énergie selon l'une quelconque des revendications 1 et 2, **caractérisé en ce qu'**un élément d'absorption d'énergie (60, 100) est disposé entre l'élément d'appui (30) et le tube-corps (2), qui coulisse, lors d'un choc, dans l'élément d'appui (30) qui reste fixe ; en fonctionnement normal l'élément d'absorption d'énergie (60, 100) étant fixe par rapport à l'élément d'appui (30) et par rapport au tube-corps (2), ladite absorption d'énergie est indépendante du réglage en position du tube-corps (2).

4. Dispositif d'absorption d'énergie selon la revendication 3, **caractérisé en ce que** l'élément d'absorption d'énergie (60) est un bandeau métallique à section ajustée en fonction de l'énergie à absorber qui est monté parallèlement à la portion centrale (33) de l'élément d'appui (30), dont l'extrémité avant (61) est solidaire de ladite portion centrale (33), et dont l'extrémité arrière (62) du côté du volant de direction s'engage et s'applique en se déformant, lors d'un choc, dans l'extrémité avant du tube-corps (2).

5. Dispositif d'absorption d'énergie selon la revendication 3, **caractérisé en ce que** l'élément d'absorption d'énergie (100) est un bandeau métallique à section ajustée en fonction de l'énergie à absorber qui est monté parallèlement à la portion centrale (33) de l'élément d'appui (30), dont l'extrémité avant (103, 104) est solidaire de ladite portion centrale (33), et dont l'extrémité arrière (105, 106) du côté du volant de direction est liée au tube-corps (2) et se déforme par rapport audit tube-corps (2).

6. Dispositif d'absorption d'énergie selon la revendication 1, **caractérisé en ce que :**
- l'élément d'appui (30) comporte deux portions inclinées (43, 44) l'une par rapport à l'autre et sensiblement parallèles à l'axe de direction (3), chaque portion inclinée (43, 44) étant disposée entre le chemin de roulement externe (31, 32) correspondant et la portion centrale (33) ;
- ladite portion centrale (33) est munie d'un trou (34) de passage d'une tige de serrage (70) du système de raccordement ;
- le montant latéral (11) comporte deux portions de maintien inclinées (91, 92), qui sont disposées de part et d'autre du plan de serrage (9), et qui sont agencées de manière à ce que la portion inclinée (43, 44) correspondante de l'élément d'appui (30) vienne s'appliquer contre ladite portion de maintien inclinée (91, 92) lorsque le système de raccordement est bloqué ;
- le montant latéral (11) comporte un trou (19) de passage de la tige de serrage (70).

7. Dispositif d'absorption d'énergie selon l'une quelconque des revendications 1 à 4 ou 5, **caractérisé en ce que** la colonne de direction est réglable en hauteur et/ou en profondeur.

8. Dispositif d'absorption d'énergie selon la revendication 7, **caractérisé en ce que** le système de raccordement entre l'élément d'appui (30) et l'ensemble support (6) est un système de serrage (4) suivant un axe de serrage (5), qui est sensiblement perpendiculaire au plan vertical (8) de l'axe de direction (3).

9. Dispositif d'absorption d'énergie selon la revendication 8, **caractérisé en ce que** le système de serrage (4) comprend une tige de serrage (70) dont l'axe est l'axe de serrage (5), tous les autres éléments du système de serrage (4) sont montés sur ladite tige de serrage (70), qui traverse l'élément d'appui (30), le montant latéral (11) ainsi que tous les autres éléments de serrage ; la tige de serrage (70) ayant une tête (73) qui s'applique contre la face interne (39) de la portion centrale (33) de l'élément d'appui (30) et une extrémité externe filetée (72) sur laquelle se monte un écrou de serrage (74).

10. Dispositif d'absorption d'énergie selon la revendication 9, **caractérisé en ce que :**
- l'élément d'appui (30) comporte deux portions inclinées (43, 44) l'une par rapport à l'autre et sensiblement parallèles à l'axe de direction (3), chaque portion inclinée (43, 44) étant disposée entre le chemin de roulement externe (31, 32) correspondant et la portion centrale (33) ;
- ladite portion centrale (33) est munie d'un trou oblong de passage (34) de la tige de serrage (70) qui est parallèle à l'axe de direction 3 ;
- un élément de maintien (90) est disposé entre l'élément d'appui (30) et la face interne (15) du montant latéral (11), ledit élément de maintien (90) comportant deux portions de maintien inclinées (91, 92), qui sont disposées de part et d'autre du plan de serrage (9), et sont agencées de manière à ce que la portion inclinée (43, 44) correspondante de l'élément d'appui (30) vienne s'appliquer contre ladite portion de maintien inclinée (91, 92) lorsque le système de serrage (4) est en position verrouillée ;
- ledit élément de maintien (90) comporte un trou de passage (97) de la tige de serrage (70) ;
- le montant latéral (11) comporte un trou oblong de passage (19) de la tige de serrage (70), qui est perpendiculaire au plan de serrage (9).

11. Dispositif d'absorption d'énergie selon la revendication 10, **caractérisé en ce que** la tige de serrage (70) porte un élément de coulissement (78) dans le trou oblong (34) de l'élément d'appui (30), ledit élément de coulissement (78) étant revêtu d'un matériau plastique à faible coefficient de frottement.

## Claims

1. A device for absorbing energy from an automobile vehicle steering column, said column comprising a steering shaft (1) rotatably mounted about a steering axis (3) in a body-tube (2), said body-tube (2) being connected to a support assembly (6) fixed to the structure of the vehicle, said device including:
- a bearing member (30) which is connected to the support assembly (6) by a lateral connection system relative to the vertical plane (6) of the steering axis ;
- said bearing member (30) being disposed laterally relative to the vertical plane (8) of the steering axis and being disposed between said body-tube (2) and a lateral upright (11) of the support assembly, which is substantially parallel to the vertical plane (8) of the steering axis ;
- an axial guidance system acting along the steering axis (3), which is disposed between said body-tube (2) and the bearing member (30) ;
**characterized in that** the axial guidance comprises :
- a member (20) laterally sliding relative to the vertical plane (8) of the steering axis (3) that is attached to and arranged on the body-tube (2) ;
- the lateral sliding member (20) is substantially parallel to the vertical plane (8) of the steering axis (3) and has a central portion (23) that has two ends each extended vertically by an internal raceways (21, 22), each of the two internal raceways (21, 22) having a direction substantially parallel to the steering axis (3), the two internal raceways (21, 22) being situated one on each side of a clamping plane (9) passing through the steering axis (3) and perpendicular to the vertical plane (8) of the steering axis (3) ;
- the bearing member (30) has a substantially vertical central portion (33) that is pressed against the lateral upright (11) of the support assembly (6) and that has two ends each extended vertically by two external raceways (31, 32), each of the two external raceways (31, 32) having a direction substantially parallel to the steering axis (3), the two external raceways (31, 32) being situated one on each side of the clamping plane (9) of the steering axis (3) ;
- balls (51, 52) that are disposed axially between the lateral sliding member (20) of the body-tube (2) and the bearing member (30),
- the balls (51, 52) are arranged in two sets that are respectively disposed between the respective internal raceway (21, 22) and the respective external raceway (31, 32), each of the two ball sets having balls (51, 52) which are retained relative to each other by a respective cage (53, 54) ;
- said device being arranged so that :
. in normal operation there is no axial sliding movement between the body-tube (2) and the bearing member (30) ;
. and in the event of an impact, there is axial sliding between the lateral sliding member (20) of the body-tube (2) carrying the steering shaft and the bearing member (30) retained in position relative to the support assembly (6) by the connecting system, with a quantity of energy substantially negligible compared to the total absorption of energy and/or accurately adjustable.

2. An energy absorbing device according to claim 1, **characterized in that** each of the internal (21, 22) and external (31, 32) raceways comprises two planes (25, 26 - 27, 28) and (35, 36 - 37, 38) inclined relative to each other and parallel to the steering axis (3) ; the rear end to the steering wheel of each of the two external raceways (31, 32) having a stepped portion (41, 42) which folds against the end of the cage (53, 54) of the respective balls (51, 52).

3. An energy absorbing device according to any one of claims 1 and 2, **characterized in that** an energy absorbing member (60, 100) is disposed between the bearing member (30) and the body-tube (2), the body-tube, in the event of an impact, sliding in the bearing member (30) which remains fixed ; the energy absorbing member (60, 100) being fixed relative to the bearing member (30) and relative to the body-tube (2) in normal operation, said absorption of energy is independent of the position adjustment of the body-tube (2).

4. An energy absorbing device according to claim 3, **characterized in that** the energy absorbing member (60) is a metal band whose section is adjusted as a function of the energy to be absorbed and which is mounted parallel to the central portion (33) of the bearing member (30), whose front end (61) is fastened to said central portion (33) and whose rear end (62) to the steering wheel is engaged in, and in the event of an impact deformed against, the front end of the body-tube (2).

5. An energy absorbing device according to claim 3, **characterized in that** the energy absorbing member (100) is a metal band whose section is adjusted as a function of the energy to be absorbed and which is mounted parallel to the central portion (33) of the bearing member (30), whose front end (103, 104) is fastened to the central portion (33), and whose rear end (105, 106) to the steering wheel end is connected to the body-tube (2) and is deformed relative to said body-tube (2).

6. An energy absorbing device according to claim 1, **characterized in that:**
- the bearing member (30) has two portions (43, 44) inclined relative to each other and substantially parallel to the steering axis (3), each inclined portion (43, 44) being disposed between the respective external raceway (31, 32) and the central portion (33) ;
- said central portion (33) includes a hole (34) through which passes a clamping rod (70) of the connecting system ;
- the lateral upright (11) comprises two inclined retaining portions (91, 92) which are disposed one on each side of the clamping plane (9) and which are arranged so that the corresponding inclined portion (43, 44) of the bearing member (30) is pressed against said inclined retaining portion (91, 92) when the connecting system is immobilized ;
- the lateral upright (11) has a hole (19) in it through which the clamping rod (70) passes.

7. An energy absorbing device according to any one of claims 1 to 4 or 5, **characterized in that** the steering column is adjustable in height and/or in depth.

8. An energy absorbing device according to claim 7, **characterized in that** the connecting system between the bearing member (30) and the support assembly (6) is a clamping system (4) along a clamping axis (5) which is substantially perpendicular to the vertical plane (8) containing the steering axis (3).

9. An energy absorbing device according to claim 8, **characterized in that** the clamping system (4) includes a clamping rod (70) whose axis is the clamping axis (5), all the other clamping members of the clamping system (4) are mounted on the clamping rod (70) which passes through the bearing member (30), the lateral upright (11) and the other clamping members ; the clamping rod (70) having a head (73) that is pressed against an internal face (39) of the central portion (33) of the bearing member (30) and a threaded external end (72) on which a clamping nut (74) is mounted.

10. An energy absorbing device according to claim 9, **characterized in that:**
- the bearing member (30) has two portions (43, 44) inclined relative to each other and substantially parallel to the steering axis (3), each inclined portion (43, 44) being disposed between the respective external raceway (31, 32) and the central portion (33) ;
- said central portion (33) includes an oblong hole (34) through which passes the clamping rod (70) which is parallel to the steering axis (3) ;
- a retaining member (90) is disposed between the bearing member (30) and the internal face (15) of the lateral upright (11), said retaining member (90) having two inclined retaining portions (91, 92) which are disposed one on each side of the clamping plane (9) and are arranged so that the corresponding inclined portion (43, 44) of the bearing member (30) is pressed against said inclined retaining portion (91, 92) when the clamping system (4) is locked;
- said retaining member (90) has a hole (97) through which the clamping rod (70) passes;
- the lateral upright (11) has an oblong hole (19) through which the clamping rod (70) passes and which is perpendicular to the clamping plane (9).

11. An energy absorbing device according to claim 10, **characterized in that** the clamping rod (70) carries a sliding member (78) in the oblong hole (34) of the bearing member (30), said sliding member (78) being coated with a plastics material having a low coefficient of friction.

## Patentansprüche

1. Energieabsorptionsvorrichtung für eine Automobil-Lenksäule, bestehend aus einer Lenkachse (1) mit einem Lenkrad, die drehend um eine Lenkachse (3) in einem Mantelrohr (2) installiert ist, das mit einer am Fahrgestell des Fahrzeugs befestigten Trageinheit (6) verbunden ist, wobei die Vorrichtung Folgendes umfasst:
- ein Abstützelement (30), das mit der Trageinheit (6) durch ein gegenüber der vertikalen Ebene (8) der Lenkachse seitliches Verbindungssystem verbunden ist;
- wobei das Abstützelement (30) gegenüber der vertikalen Ebene (8) der Lenkachse(3) seitlich angeordnet ist und zwischen dem Mantelrohr (2) und einem seitlichen Schenkel (11) der Trageinheit (6) sitzt, der im Wesentlichen parallel zur vertikalen Ebene (8) der Lenkachse (3) verläuft;
- ein in der Lenkachse (3) axiales Führungssystem, das zwischen dem Mantelrohr (2) und dem Abstützelement (30) angeordnet ist;
**dadurch gekennzeichnet, dass** das axiale Führungssystem Folgendes umfasst:
- ein gegenüber der vertikalen Ebene (8) der Lenkachse (3) seitliches Gleitelement (20), das angesetzt auf dem Mantelrohr (2) angeordnet ist;
- das seitliche Gleitelement (20) ist im Wesentlichen parallel zur vertikalen Ebene (8) der Lenkachse (3) und umfasst einen mittleren Abschnitt (23), der sich vertikal bis zu jedem seiner beiden Enden durch jeweils eine innere Laufbahn (21, 22) fortsetzt, wobei jede der beiden inneren Laufbahnen (21, 22) in im Wesentlichen paralleler Richtung zur Lenkachse (3) verläuft und sich die beiden inneren Laufbahnen (21, 22) auf der einen und anderen Seite einer Festziehebene (9) befinden, die durch die Lenkachse (3) hindurchgeht und senkrecht zur vertikalen Ebene (8) der Lenkachse (3) steht;
- das Abstützelement (30) umfasst einen im Wesentlichen vertikalen mittleren Abschnitt (33), der sich an den seitlichen Schenkel (11) der Trageinheit (6) anlegt und sich vertikal bis zu jedem seiner Enden durch eine äußere Laufbahn (31, 32) fortsetzt, wobei jede der beiden äußeren Laufbahnen (31, 32) in im Wesentlichen paralleler Richtung zur Lenkachse (3) verläuft und sich die beiden äußeren Laufbahnen (31, 32) auf der einen und anderen Seite der Festziehebene (9) der Lenkachse (3) befinden;
- Kugeln (51, 52), die axial zwischen dem seitlichen Gleitelement (20) des Mantelrohrs (2) und dem Abstützelement (30) angeordnet sind,
- die Kugeln (51, 52) sind in zwei Sets angeordnet, die jeweils zwischen der inneren Laufbahn (21, 22) und der entsprechenden äußeren Laufbahn (31, 32) sitzen, wobei jedes der beiden Sets seine eigenen Kugeln (51, 52) hat, die von einem Käfig (53, 54) gegeneinander gehalten werden,
- wobei die Vorrichtung so gestaltet ist,
. dass es im normalen Betrieb keine axiale Verschiebebewegung zwischen dem Mantelrohr (2) und dem Abstützelement (30) gibt;
. und dass es im Falle eines Zusammenstoßes zu einer axialen Verschiebung zwischen dem seitlichen Gleitelement (20) des Mantelrohrs (2), das die Lenkwelle trägt, und dem Abstützelement (30) kommt, das vom Verbindungssystem gegenüber der Trageinheit (6) in seiner Position gehalten wird, und zwar mit einer gegenüber der gesamten und/oder genau einstellbaren Energieaufnahme vernachlässigbaren Energiemenge.

2. Energieabsorptionsvorrichtung nach Anspruch 1, **dadurch gekennzeichnet, dass** jede innere (21, 22) und äußere (31, 32) Laufbahn aus zwei gegeneinander geneigten Ebenen (25, 26 - 27, 28) bzw. (35, 36 - 37, 38) besteht, die parallel zur Lenkachse (3) verlaufen, wobei das hintere lenkradseitige Ende jedes der beiden äußeren Laufbahnen (31, 32) einen abgesetzten Abschnitt (41, 42) aufweist, der gegen das Ende des Käfigs (53, 54) der entsprechenden Kugeln (51, 52) umgebogen ist.

3. Energieabsorptionsvorrichtung nach einem beliebigen der Ansprüche 1 und 2, **dadurch gekennzeichnet, dass** ein Energieabsorptionselement (60, 100) zwischen dem Abstützelement (30) und dem Mantelrohr (2) angeordnet ist, das bei einem Zusammenstoß im Abstützelement (30) gleitet, das fest in seiner Lage verharrt, wobei das Energieabsorptionselement (60, 100) im Normalbetrieb gegenüber dem Abstützelement (30) und dem Mantelrohr (2) fest ist und die Energieaufnahme von der eingestellten Stellung des Mantelrohrs (2) unabhängig ist.

4. Energieabsorptionsvorrichtung nach Anspruch 3, **dadurch gekennzeichnet, dass** das Energieabsorptionselement (60) ein Stahlband mit einem je nach der zu absorbierenden Energie angepassten Querschnitt ist, das parallel zum mittleren Abschnitt (33) des Abstützelements (30) montiert ist, dessen vorderes Ende (61) fest mit dem mittleren Abschnitt (33) verbunden ist und dessen hinteres lenkradseitiges Ende (62) sich im Falle eines Zusammenstoßes in das vordere Ende des Mantelrohrs (2) hineinschiebt und sich daran unter Verformung anlegt.

5. Energieabsorptionsvorrichtung nach Anspruch 3, **dadurch gekennzeichnet, dass** das Energieabsorptionselement (100) ein Stahlband mit einem je nach der zu absorbierenden Energie angepassten Querschnitt ist, das parallel zum mittleren Abschnitt (33) des Abstützelements (30) montiert ist, dessen vorderes Ende (103, 104) fest mit dem mittleren Abschnitt (33) verbunden ist und dessen hinteres lenkradseitiges Ende (105, 106) mit dem Mantelrohr (2) verbunden ist und sich gegenüber diesem Mantelrohr (2) verformt.

6. Energieabsorptionsvorrichtung nach Anspruch 1, **dadurch gekennzeichnet, dass**
- das Abstützelement (30) zwei gegeneinander geneigte und zur Lenkachse (3) im Wesentlichen parallele Abschnitte (43, 44) aufweist, von denen jeder zwischen der entsprechenden äußeren Laufbahn (31, 32) und dem mittleren Abschnitt (33) angeordnet ist;
- dieser mittlere Abschnitt (33) mit einem Durchgangsloch (34) für einen Festziehstift (70) des Verbindungssystems versehen ist;
- der seitliche Schenkel (11) zwei geneigte Halteabschnitte (91, 92) aufweist, die auf der einen und der anderen Seite der Festziehebene (9) angeordnet und so gestaltet sind, dass sich der jeweilige geneigte Abschnitt (43, 44) des Abstützelements (30) an den besagten geneigten Halteabschnitt (91, 92) anlegt, wenn das Verbindungssystem arretiert wird;
- der seitliche Schenkel (11) ein Durchgangsloch (19) für den Festziehstift (70) aufweist.

7. Energieabsorptionsvorrichtung nach einem beliebigen der Ansprüche 1 bis 4 oder 5, **dadurch gekennzeichnet, dass** die Lenksäule in der Höhe und/oder der Tiefe verstellbar ist.

8. Energieabsorptionsvorrichtung nach Anspruch 7, **dadurch gekennzeichnet, dass** das Verbindungssystem zwischen dem Abstützelement (30) und der Trageinheit (6) ein Festziehsystem (4) zum Festziehen in einer Festziehachse (5) ist, die im Wesentlichen senkrecht zur vertikalen Ebene (8) der Lenkachse (3) steht.

9. Energieabsorptionsvorrichtung nach Anspruch 8, **dadurch gekennzeichnet, dass** das Festziehsystem (4) einen Festziehstift (70) umfasst, dessen Achse die Festziehachse (5) ist, und dass alle anderen Elemente des Festziehsystems (4) auf den Festziehstift (70) montiert sind, der durch das Abstützelement (30), den seitlichen Schenkel (11) und alle anderen Festziehelemente hindurchgeht, wobei der Festziehstift (70) einen Kopf (73), der sich an die Innenfläche (39) des mittleren Abschnitts (33) des Abstützelements (30) anlegt, und ein äußeres Gewindeende (72) aufweist, auf dem eine Festziehmutter (74) sitzt.

10. Energieabsorptionsvorrichtung nach Anspruch 9, **dadurch gekennzeichnet, dass**
- das Abstützelement (30) zwei gegeneinander geneigte und zur Lenkachse (3) im Wesentlichen parallele Abschnitte (43, 44) aufweist, von denen jeder zwischen der jeweiligen äußeren Laufbahn (31, 32) und dem mittleren Abschnitt (33) angeordnet ist;
- dieser mittlere Abschnitt (33) mit einem Durchgangslangloch (34) für den Festziehstift (70) des Verbindungssystems (3) versehen ist;
- ein Halteelement (90) zwischen dem Abstützelement (30) und der Innenfläche (15) des seitlichen Schenkels (11) angeordnet ist, wobei dieses Halteelement (90) zwei geneigte Halteabschnitte (91, 92) umfasst, die auf der einen und der anderen Seite der Festziehebene (9) angeordnet und so gestaltet sind, dass sich der jeweilige geneigte Abschnitt (43, 44) des Abstützelements (30) an den besagten geneigten Halteabschnitt (91, 92) anlegt, wenn sich das Festziehsystem (4) in der verriegelten Stellung befindet;
- das Haltelement (90) ein Durchgangsloch (97) für den Festziehstift (70) aufweist und
- der seitliche Schenkel (11) ein zur Festziehebene (9) senkrechtes Durchgangslangloch (19) für den Festziehstift (70) aufweist.

11. Energieabsorptionsvorrichtung nach Anspruch 10, **dadurch gekennzeichnet, dass** auf dem Festziehstift (70) ein Gleitelement (78) zum Gleiten im Langloch (34) des Abstützelements (30) sitzt, wobei dieses Gleitelement (78) mit Kunststoff mit niedrigem Reibungskoeffizienten beschichtet ist.
